# EUROPÄISCHE PATENTSCHRIFT

(11) **EP 0 519 109 B1**
(45) Veröffentlichungstag und Bekanntmachung des Hinweises auf die Patenterteilung: **23.12.1998**
(21) Anmeldenummer: 91110207.7
(22) Anmeldetag: 21.06.1991
(51) Int. Cl.: G06F 9/46

(54) **Zugriffskontrolle in Rechnernetzen**
Access control in computer networks
Contrôle d'accès dans des réseaux d'ordinateurs

(43) Veröffentlichungstag der Anmeldung: 23.12.1992
(73) Patentinhaber: International Business Machines Corporation, Armonk, N.Y. 10504 (US)
(72) Erfinder: Geihs, Kurt, Dr., W-6140 Bensheim (DE); Hollberg, Ulf, Dr., W-6908 Wiesloch (DE); Eberle, Herbert, W-6900 Heidelberg (DE); Heite, Reinhard, W-6900 Heidelberg (DE)
(74) Vertreter: Teufel, Fritz, Dipl.-Phys.

(56) Entgegenhaltungen:
- PROCEEDINGS 1989 IEEE COMPUTER SOCIETY SYMPOSIUMON SECURITY AND PRIVACY 1. Mai 1989, OAKLAND, US Seiten 56 - 63; L. GONG: 'A secure identity-based capability system'

## Beschreibung

Die Erfindung betrifft ein Rechnernetz mit wenigstens drei Knoten, in denen Mittel zur Durchführung von Funktionen vorhanden sind, wobei der erste Knoten wenigstens auf eine Funktion des zweiten Knotens zugreifen kann.

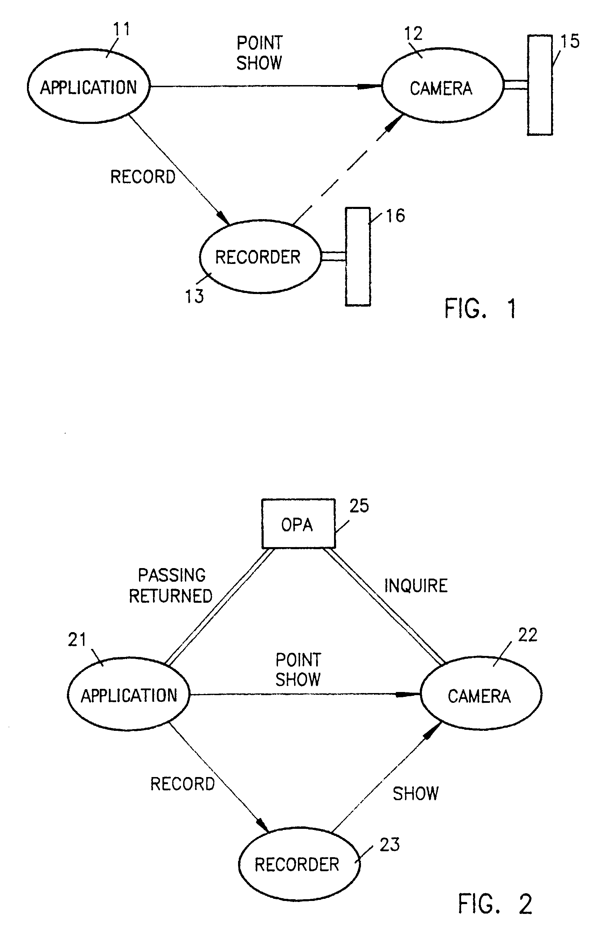

- Fig. 1: zeigt schematisch ein Beispiel für ein derartiges Rechnernetz aus dem Bereich der Multimedia-Anwendungen.

Dort besteht das Rechnernetz aus drei Knoten 11, 12, 13, die über Kommunikationseinrichtungen miteinander verbunden sind. Jeder der Knoten enthält Vorrichtungen, u.a. Computer mit deren Hilfe bestimmte Funktionen durchgeführt werden können. So steuert der Knoten 12 eine Camera, die die Funktionen "point" und "show" ausführen kann, während der Knoten 13 einen Recorder steuert, der die Funktion "record" ausführen kann. Auf diese Funktionen kann eine auf einem Computer des Knoten 11 ablaufende Anwendung (Application) mit Hilfe von entsprechenden Aufrufen, sogenannten "remote procedure calls", zugreifen, d.h., daß die Anwendung die Camera beispielsweise die Funktion "show" ausführen lassen kann.

Voraussetzung dafür ist, daß die Anwendung in dem zuletzt genannten Fall auch die Berechtigung für den Zugriff auf die Camera besitzt. Dies kann beispielsweise mit Hilfe von Zugriffslisten 15, 16 realisiert werden, die den Knoten 12, 13 zugeordnet sind. Mit Hilfe der Zugriffsliste 15 ist es möglich, jeden anderen Knoten abzuspeichern, der auf die Funktionen des Knotens 12, also der Camera, zugreifen darf. Existiert bei einem Zugriff der Anwendung auf die Camera eine eingetragene Zugriffsberechtigung in der Zugriffsliste 15, so wird der Zugriff zugelassen, andernfalls wird der Zugriff zurückgewiesen. Gleiches kann mit Hilfe der Zugriffsliste 16 für den Recorder des Knotens 13 erfolgen.

Oft ist es erwünscht oder erforderlich, daß beispielsweise der Knoten 11 nicht direkt auf den Knoten 12 zugreift, sondern indirekt über den Knoten 13. Dies ist z.B. dann der Fall, wenn die Anwendung auf die Funktion "record" des Recorders zugreifen will, diese Funktion "record" jedoch ihrerseits den Zugriff auf die Funktion "show" der Camera erfordert. Ist in diesem Fall in der Zugriffsliste 15 nur der Knoten 11 als zugriffsberechtigt eingetragen, nicht jedoch der Knoten 13, dann wird der Zugriff des Recorders auf die Camera zurückgewiesen. Es ist also erforderlich, daß vor dem indirekten Zugriff der Anwendung auf die Camera der Knoten 13 des Recorders in die Zugriffsliste 15 eingetragen wird. Diese Eintragung kann beispielsweise von der Anwendung selbst vorgenommen werden, wobei allerdings in diesem Fall zum Schutz der Zugriffsliste 15 weitere Zugriffslisten erforderlich sein können. Desweiteren ist es in diesem Fall für eine Konsistenz des Inhalts der Zugriffsliste 15 erforderlich, daß nach dem indirekten Zugriff der Recorder wieder aus der Zugriffsliste 15 gelöscht wird.

Insbesondere bei kurzlebigen indirekten Zugriffen ergibt sich daraus ein hoher Speicherplatzbedarf in den einzelnen Knoten zur Führung der verschiedenen Zugriffslisten, sowie ein großer Aufwand an in den einzelnen Knoten auszuführenden Befehlen und Aufrufen zum Verändern der Zugriffslisten in anderen Knoten. Desweiteren birgt dieses Verändern von Zugriffslisten viele Fehlermöglichkeiten in sich und ist für einen Bediener kaum durchschaubar.

Ein derartiges System mit Zugriffslisten bei jedem Knoten und einer zentralen Zugriffsliste, die bei der Weitergabe von Zugriffsberechtigungen abgefragt und auf dem laufenden gehalten wird, ist aus der Veröffentlichtung L.Gong 'A secure identity-based capability system' Proceedings 1989 IEEE Computer Society Symposium on Security and Privacy, May 1, 1989, S. 56 bis 63 bekannt.

Aufgabe der Erfindung ist es, ein Rechnernetz sowie ein Verfahren zum Betreiben eines Rechnernetzes zu schaffen, das auf einfache Weise indirekte Zugriffe ermöglicht.

Gelöst wird die Aufgabe durch die in den Patentansprüchen 1-12 beanspruchten Gegenstände.

Die Speicherung von Zugriffsberechtigungen wird automatisch durchgeführt. Der Bediener hat mit der Änderung und Überwachung der Zugriffsberechtigungen nichts zu tun. Schon allein dadurch ist eine wesentlich geringere Fehlerhäufigkeit zu erwarten. Desweiteren ist es nicht mehr erforderlich, jedem Knoten verschiedene Zugriffsberechtigungslisten zuzuordnen. Dics hat eine Einsparung von Speicherplatz in den einzelnen Knoten zur Folge. Auch werden von den erfindungsgemäßen Mitteln immer nur die gerade erforderlichen Zugriffsberechtigungen erteilt und abgespeichert, was ebenfalls eine Verringerung des benötigten Speicherplatzes zur Folge hat und die Sicherheit erhöht.

Bei Ausführungsformen der Erfindung sind Aufrufe vorgesehen, die die Weitergabe der Zugriffsberechtigung, die Beendigung der Weitergabe der Zugriffsberechtigung und/oder die Überprüfung der Zugriffsberechtigung zum Inhalt haben. Mit Hilfe dieser Aufrufe werden die in den erfindungsgemäßen Mitteln abgespeicherten Zugriffsberechtigungen verändert und/oder überprüft. Die Zugriffsberechtigungen werden dynamisch auf dem Laufenden gehalten, wobei jeder Knoten bestimmte Zugriffsberechtigungen abfragen und überprüfen kann.

Die vorgesehenen Aufrufe, von denen die Zugriffsberechtigungen und deren Änderungen abhängig sind, werden automatisch übermittelt. Sie basieren auf Schnittstellendefinitionen der einzelnen Knoten.

Bei einer weiteren Ausgestaltung der Erfindung sind die erfindungsgemäßen Mittel zur automatischen Speicherung von Zugriffsberechtigungen in einem der drei Knoten oder in einem vierten Knoten untergebracht, wobei des weiteren Mittel vorgesehen sind zum Übermitteln der Aufrufe zwischen verschiedenen Knoten. Die erfindungsgemäßen Mittel zur automatischen Speicherung von Zugriffsberechtigungen können beliebig in irgend einem Knoten untergebracht sein. Für die daraus entstehende Notwendigkeit der Übermittlung der Aufrufe zwischen verschiedenen Knoten sind erfindungsgemäß entsprechende Mittel vorgesehen. Die Aufrufe werden von den einzelnen Knoten über die Kommunikationseinrichtungen zu den erfindungsgemäßen Mitteln zur Speicherung von Zugriffsberechtigungen automatisch übermittelt. Der Bediener hat mit diesen Vorgängen nichts zu tun.

Bei einer weiteren Ausgestaltung der Erfindung sind Mittel vorgesehen zur beschränkten Weitergabe von Zugriffsberechtigungen. Der Bediener kann dadurch gezielt bestimmten Knoten bestimmte Zugriffe auf andere Knoten erlauben.

Schließlich wird erfindungsgemäß ein Verfahren zum Betreiben eines Rechnernetzes mit wenigsten drei Knoten zur Verfügung gestellt, in denen Mittel zur Durchführung von Funktionen vorhanden sind, mit den folgenden Schritten: Es werden Mittel zur Verfügung gestellt zum automatischen Abspeichern von Zugriffsberechtigungen der Knoten untereinander, es werden Aufrufe übermittelt zum Verändern der Zugriffsberechtigungen und es werden Aufrufe übermittelt zum Überprüfen der Zugriffsberechtigungen.

Weitere vorteilhafte Ausgestaltungen der Erfindung ergeben sich aus der nachfolgenden Beschreibung von Ausführungsbeispielen der Erfindung im Zusammenhang mit den Zeichnungen.
- Fig. 2: zeigt ein erfindungsgemäßes Rechnernetz,
- Fig. 3: zeigt eine schematische Darstellung des Ablaufs eines indirekten Zugriffs auf eine Funktion eines Knotens des Rechnernetzes der Fig. 2, und
- Fig. 4: zeigt eine schematische Darstellung der Zugriffsberechtigungen bei dem indirekten Zugriff gemäß der Fig. 3.

Fig. 2 zeigt ein Rechnernetz mit drei Knoten 21, 22, 23. In jedem Knoten sind Vorrichtungen, z.B. Computer oder sonstige Mittel vorgesehen zur Durchführung von Funktionen. So ist im Knoten 21 ein Computer vorgesehen zur Ausführung von Anwendungen (Applications), z.B. Programmen, im Knoten 22 eine Camera, die mit der Funktion "point" geschwenkt werden kann und mit der Funktion "show" Bilder zeigen kann, sowie im Knoten 23 ein Recorder, der mit der Funktion "record" Aufnahmen vornehmen kann. Die Knoten 21, 22, 23 sind über Kommunikationseinrichtungen miteinander verbunden, so daß Aufrufe oder dergleichen von einem Knoten an die anderen Knoten übermittelt werden können.

Desweiteren ist ein sogenannter OBJECT-PASSING-AGENT OPA 25 vorgesehen, der entweder in einem der Knoten 21, 22 untergebracht oder Bestandteil eines weiteren Knotens sein kann. In jedem Fall können zwischen dem OPA 25 und den vorhandenen Knoten ebenfalls Aufrufe und dergleichen übermittelt werden.

Für die nachfolgende Erläuterung eines indirekten Zugriffs der Anwendung über den Recorder auf die Camera sei angenommen, daß die Anwendung eine Zugriffsberechtigung auf die Camera für die Funktionen "point" und "show" habe. Desweiteren habe die Anwendung eine Zugriffsberechtigung auf den Recorder für die Funktion "record". Der Recorder habe jedoch keine Zugriffsberechtigung auf die Camera.

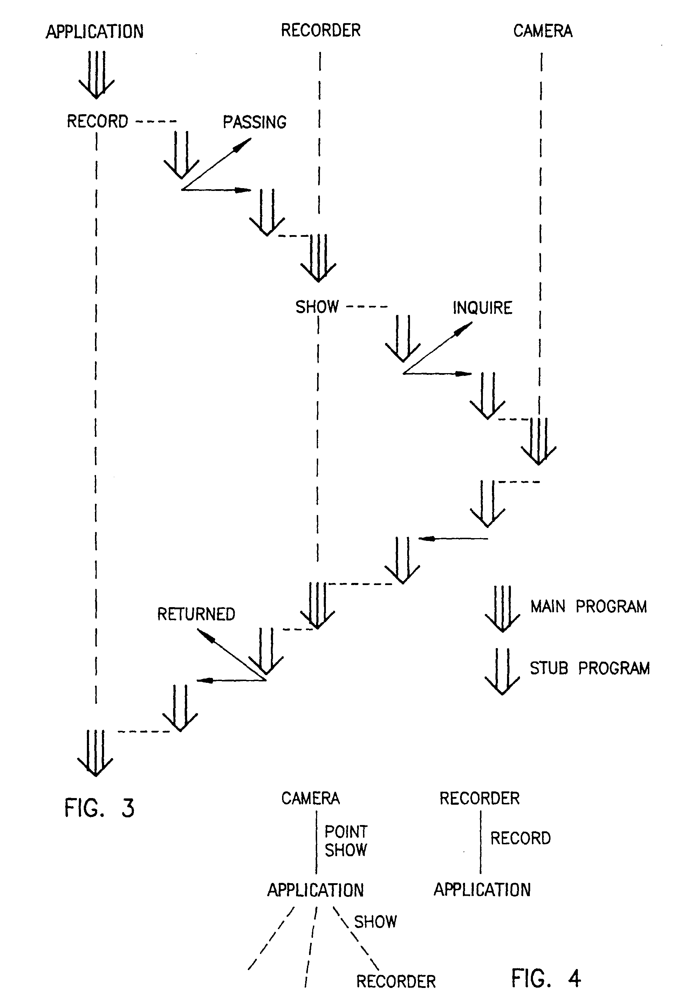

In dem OPA 25 sind die genannten Zugriffsberechtigungen abgespeichert. Dies ist in der Fig. 4 beispielhaft in der Form eines Zugriffsberechtigungsbaumes dargestellt. Durch die Verknüpfung der Camera und der Anwendung mit den zugehörigen Funktionen "point" und "show" soll die Zugriffsberechtigung der Anwendung auf die Camera zum Ausdruck gebracht werden (Fig. 4, links). Ebenso soll durch die Verknüpfung des Recorders mit der Anwendung und der zugehörigen Funktion "record" die Zugriffsberechtigung der Anwendung auf den Recorder dargestellt werden (Fig.4, rechts). Die Verknüpfung des Recorders mit der Camera hinsichtlich der Funktion "show" existiert zum derzeitigen Zeitpunkt noch nicht und ist deshalb gestrichelt dargestellt (Fig.4, links).

Für die Ausführung der Funktion "record" durch den Recorder ist der Zugriff des Recorders auf die Funktion "show" der Camera erforderlich.

Der Ablauf eines derartigen indirekten Zugriffs ist in der Fig. 3 schematisch dargestellt. Dort wird unterschieden zwischen einem sogenannten MAIN-Programm und einem sogenannten STUB-Programm. Tritt im Ablauf eines MAIN-Programms ein Befehl oder ein Aufruf auf, der auf eine Funktion eines anderen Knotens zugreift, so wird der Ablauf des MAIN-Programms gestoppt und ein zugehöriges STUB-Programm wird aufgerufen. Das STUB-Programm sammelt und "verpackt" die für den Aufruf der genannten Funktion erforderlichen Informationen und übermittelt diese an den entsprechenden Knoten. Dort werden die Informationen von einem zugeordneten STUB-Programm empfangen, "ausgepackt" und an das die Funktion ausführende MAIN-Programm übergeben. Mit Hilfe der STUB-Programme werden somit Übermittlungen innerhalb des Rechnernetzes durchgeführt unabhängig von Datenformaten oder dergleichen in den Knoten des Rechnernetzes.

Wie in der Fig. 3 dargestellt ist, tritt im Ablauf des MAIN-Programms der Anwendung der Aufruf "record" auf, der die Bedeutung hat, daß auf dem Recorder die Funktion "record" ausgeführt werden soll. Zur Ausführung der Funktion "record" wird mit dem Aufruf "record" gleichzeitig dem Recorder von der Anwendung die Zugriffsberechtigung auf die Funktion "show" der Camera erteilt. Ein zugehöriges STUB-Programm übermittelt die für die Funktion "record" erforderlichen Informationen an das STUB-Programm des Recorders. Gleichzeitig übermittelt das STUB-Programm der Anwendung einen Aufruf "passing (show, recorder)" an den OPA 25. Damit wird dem OPA 25 mitgeteilt, daß der Recorder von der Anwendung die Zugriffsberechtigung auf die Funktion "show" der Camera erhalten hat. In der Fig. 4 ist dies dadurch dargestellt, daß in dem Zugriffsberechtigungsbaum eine gestrichelte Verknüpfung zwischen der Anwendung und dem Recorder mit der zugehörigen Funktion "show" vorhanden ist (Fig. 4, links). Die Anwendung hat also die Zugriffsberechtigung auf die Funktion "show" der Camera an den Recorder weitergegeben.

Im Ablauf des MAIN-Programms des Recorders tritt irgendwann der Aufruf "show" auf, der die Bedeutung hat, daß die Funktion "show" der Camera ausgeführt werden soll. Dies hat wiederum zur Folge, daß das MAIN-Programm des Recorders gestoppt wird, und daß die für die Funktion "show" erforderlichen Informationen mit Hilfe der zugehörigen STUB-Programme an das MAIN-Programm der Camera weitergegeben werden. Gleichzeitig wird ein Aufruf "inquire (show, recorder)" an den OPA 25 übermittelt. Mit diesem Aufruf wird beim OPA 25 nachgefragt, ob der Recorder eine Zugriffsberechtigung auf die Funktion "show" der Camera besitzt.

Der OPA 25 überprüft diese Anfrage mit Hilfe des Zugriffsberechtigungsbaums der Fig. 4. Dort ist enthalten, daß die Anwendung die Zugriffsberechtigung auf die Funktion "show" der Camera an den Recorder weitergegeben hat. Dies bedeutet, daß der Recorder die (indirekte) Zugriffsberechtigung auf die Funktion "show" der Camera besitzt. Der OPA 25 beantwortet die Anfrage somit positiv.

Die Camera führt die Funktion "show" aus. Nach Beendigung der Funktion "show" werden die notwendigen Informationen wieder mit Hilfe von zugehörigen STUB-Programmen an das MAIN-Programm des Recorders weitergegeben. Ist die Funktion "record" vom MAIN-Programm des Recorders beendet, so werden ebenfalls wieder die entsprechenden Informationen mit Hilfe von zugehörigen STUB-Programmen an das MAIN-Programm der Anwendung übermittelt. Gleichzeitig wird ein Aufruf "returned (show, recorder)" an den OPA 25 übermittelt. Dies hat im OPA 25 zur Folge, daß die Verknüpfung der Camera und des Recorders hinsichtlich der Funktion "show" gelöscht wird. Die von der Anwendung an den Recorder weitergegebene Zugriffsberechtigung auf die Funktion "show" der Camera existiert somit jetzt nicht mehr.

Der Ablauf des Programms der Anwendung wird nunmehr mit den eingangs genannten Zugriffsberechtigungen der Anwendung auf die Funktionen "point" und "show" der Camera und die Funktion "record" des Recorders fortgesetzt. Weitere Zugriffsberechtigungen sind nicht mehr vorhanden.

Zusammengefaßt bedeutet dies, daß ein OPA 25 (Fig. 2) zur Verfügung gestellt wird, an den Aufrufe ("passing", "inquire", "returned") übermittelt werden (Fig. 3), die entweder eine entsprechende Veränderung des Zugriffsberechtigungsbaumes zur Folge haben ("passing", "returned") oder die diesen Zugriffsberechtigungsbaum abfragen ("inquire") (Fig. 4).

Der gesamte Vorgang läuft automatisch ab. Der OPA 25 ist Teil des Rechnernetzes, auf das der Bediener keinen Einfluß hat. Die Aufrufe "passing", "inquire" und "returned" werden von den STUB-Programmen erzeugt und übermittelt, die ihrerseits von einem Compiler generiert werden, also ebenfalls bedienerunabhängig sind.

Die einzige Aufgabe des Bedieners ist es, in den Schnittstellendefinitionen der einzelnen Knoten die Erlaubnis der Weitergabe von Zugriffsberechtigungen festzulegen. Bei dem beschriebenen Beispiel könnten die Schnittstellendefinition beispielsweise folgendermaßen festgelegt sein:
- Interface Camera:: function show (...)
function point (...);
- Interface Recorder:: function record (camera-object).

Diese Schnittstellendefinitionen haben die Bedeutung, daß die Camera die Funktionen "show" und "point" ausführen kann und der Recorder die Funktion "record". Der OBJEKT-Verweis-Parameter "camera-object" zeigt an, daß der Bediener die Erlaubnis erteilt zur Weitergabe der Zugriffsberechtigung auf die Camera an den Recorder. Mit anderen Worten heißt dies, daß der Bediener mit Hilfe des OBJEKT-Verweis-Parameters die Möglichkeit des Zugriffs des Recorders auf die Camera eröffnet.

Diese vom Bediener erstellten Schnittstellendefinitionen werden, wie erwähnt, von einem Compiler verarbeitet, der daraus unter anderem die STUB-Programme generiert. Mit Hilfe der OBJEKT-Verweis-Parameter in den Schnittstellendefinitionen generiert der Compiler in die im Zusammenhang mit der Fig. 3 erläuterten STUB-Probramme die entsprechenden Aufrufe "passing", "inquire" und "returned". Der Aufruf "record" im MAIN-Programm der Anwendung bewirkt den Aufruf "passing" im zugehörigen STUB-Programm. Der Aufruf "show" im MAIN-Programm des Recorders bewirkt den Aufruf "inquire" im zugehörigen STUB-Programm. Die Beendigung des MAIN-Programms des Recorders hat zur Folge, daß der Compiler im daran anschließenden STUB-Programm den Aufruf "returned" tätigt, mit dem die Weitergabe der Zugriffsberechtigung des Recorders auf die Camera beendet wird.

Bei dem beschriebenen Ausführungsbeispiel wurde vorausgesetzt, daß die Ausführung der Funktion "record" einen Zugriff des Recorders auf die Funktion "show" der Camera erfordert. Ein Zugriff des Recorders auf die Funktion "point" der Camera war jedoch nicht erforderlich. Dies äußerte sich darin, daß in den Aufrufen "passing", "inquire" und "returned" immer nur die Funktion "show" der Camera angegeben war. Es handelte sich somit um eine beschränkte Weitergabe der Zugriffsberechtigung auf die Camera, nämlich nur auf deren Funktion "show", nicht jedoch auf die Funktion "point". Es versteht sich, daß die Zugriffsberechtigung auf die Camera auch unbeschränkt weitergegeben werden könnte.

Bei dem beschriebenen Ausführungsbeispiel wurde die Zugriffsberechtigung auf die Camera an den Recorder weitergegeben und nach einer gewissen Zeit wieder zurückgenommen. Es versteht sich, daß die Zugriffsberechtigung auf die Camera gleichzeitig auch an andere Knoten weitergegeben werden kann, wenn mehrere Aufrufe parallel abgesetzt werden können. Dies ist in dem Zugriffsberechtigungsbaum der Fig. 4 durch weitere gestrichelte Linien zum Ausdruck gebracht. Die jeweilige Weitergabe der Zugriffsberechtigung und deren Beendigung wird durch entsprechende Aufrufe "passing" und "returned" veranlaßt, wobei sich diese Aufrufe dann jeweils auf verschiedene Knoten beziehen.

Ebenso versteht es sich, daß die beschriebene Weitergabe der Zugriffsberechtigung auch über mehrere Stufen erfolgen kann, z.B. daß der Recorder die Zugriffsberechtigung an einen anderen Knoten weiterreicht. Diese kaskadierte Weitergabe läuft entsprechend der beschriebenen einstufigen Weitergabe ab.

## Patentansprüche

1. Rechnernetz mit wenigstens drei Knoten (21,22,23), in denen Funktionsmittel zur Durchführung von Funktionen vorhanden sind, wobei ein Funktionsmittel des ersten Knotens (21) wenigstens auf ein Funktionsmittel des zweiten Knotens zugreifen kann, und mit einer Berechtigungseinrichtung (25) zum Speichern der aktuellen Zugriffsberechtigungen zu den Knoten,
dadurch gekennzeichnet, daß
ausschließlich die Berechtigungseinrichtung (25) alle Informationen über die aktuellen Zugriffsberechtigungen zu den Knoten enthält, und daß bei jedem Zugriff zu einem Knoten die Berechtigungseinrichtung von einem Zugriffsprogramm (STUB) abgefragt oder aktualisiert wird.

2. Rechnernetz nach Anspruch 1,
dadurch gekennzeichnet, daß
in den Zugriffsprogrammen ein Aufruf (passing) vorgesehen ist, der in der Berechtigungseinrichtung die Weitergabe der Zugriffsberechtigung von einem Knoten zu einem anderen Knoten speichert.

3. Rechnernetz nach Anspruch 2,
dadurch gekennzeichnet, daß
die Weitergabe der Zugriffsberechtigung beschränkt werden kann.

4. Rechnernetz nach Anspruch 2 oder 3,
dadurch gekennzeichnet, daß
die Zugriffsberechtigung gleichzeitig an mehrere Knoten weitergegeben werden kann.

5. Rechnernetz nach einem der Ansprüche 2 bis 4,
dadurch gekennzeichnet, daß
die Zugriffsberechtigung in mehreren Stufen weitergegeben werden kann.

6. Rechnernetz nach Anspruch einem der Ansprüche 2 bis 5,
dadurch gekennzeichnet, daß
in den Zugriffsprogrammen ein Aufruf (returned) vorgesehen ist, der die Weitergabe der Zugriffsberechtigung in der Berechtigungseinrichtung löscht.

7. Rechnernetz nach einem der Ansprüche 1 bis 6,
dadurch gekennzeichnet, daß
in den Zugriffsprogrammen (STUB) ein Aufruf (inquire) vorgesehen ist, der die Überprüfung der Zugriffsberechtigung in der Berechtigungseinrichtung durchführt.

8. Rechnernetz nach einem der Ansprüche 1 bis 7,
dadurch gekennzeichnet, daß
exklusiv für die Berechtigungseinrichtung ein Knoten vorgesehen ist.

9. Rechnernetz nach einem der Ansprüche 1 bis 8,
dadurch gekennzeichnet, daß
die Berechtigungseinrichtung zu einem gegebenen Zeitpunkt nur die aktuellen Zugriffsberechtigungen enthält.

10. Rechnernetz nach einem der Ansprüche 1 bis 9,
dadurch gekennzeichnet, daß
die Zugriffsberechtigungen durch die auf dem jeweiligen Knoten ausgeführten Funktionsprogramme definiert werden, und daß die Aufrufe in den Zugriffsprogrammen (STUB) automatisch durch Compiler der Funktionsmittel erzeugt werden.

11. Verfahren zur Steuerung von Zugriffen in einem Rechnernetz mit wenigstens drei Knoten (21, 22, 23), in denen Funktionsmittel zur Durchführung von Funktionen vorhanden sind,
wobei das Verfahren die folgenden Schritte enthält:
- die Funktionsmittel senden vor dem Zugriff zu einem Knoten einen Aufruf (inquiry) an eine für alle Knoten zuständige Berechtigungseinrichtung (25), um die Berechtigung dieses Zugriffs zu überprüfen;
- die Funktionsmittel senden zur Weitergabe der Zugriffsberechtigung an einen weiteren Knoten einen Aufruf (passing) an die Berechtigungseinrichtung (25), um dort einen Berechtigungseintrag zu erzeugen;
- die Funktionsmittel senden zur Beendigung der Weitergabe der Berechtigung einen Aufruf (returned) an die Berechtigungseinrichtung, um dort den Berechtigungseintrag zu löschen.

12. Verfahren nach Anspruch 11,
dadurch gekennzeichnet, daß
die Aufrufe an die Berechtigungseinrichtung von Zugriffsprogrammen (STRUT) erzeugt werden, die von automatisch von Compilerprogrammen für die Funktionsmittel erzeugt werden.

## Claims

1. A computer network with at least three nodes (21, 22, 23), in which function devices for the performance of functions are provided, where a function device of the first node (21) can access on at least one function device of the second node, and with an entitlement device (25) for storing the current access entitlements to the nodes,
characterised in that
only the entitlement device (25) contains all the information regarding the current access entitlements to the nodes and that, at each access to a node, the entitlement device is interrogated or updated by an access program (STUB).

2. A computer network according to Claim 1,
characterised in that
a call-up (passing) command is provided in the access program, which stores in the entitlement device the passing of access entitlement from one node to another node.

3. A computer network according to Claim 2,
characterised in that
the passing of the access entitlement can be restricted.

4. A computer network according to any of the Claims 2 or 3,
characterised in that
the access entitlement can be passed simultaneously to several nodes.

5. A computer network according to any of the Claims 2 to 4,
characterised in that
the access entitlement can be passed in several stages.

6. A computer network according to any of the Claims 2 to 5,
characterised in that
a call-up command (returned) is provided in the access program, which deletes the access entitlement in the entitlement device.

7. A computer network according to any of the Claims 1 to 6,
characterised in that
a call-up command (inquire) is provided in the access program (STUB), which carries out a check on the access entitlement in the entitlement device.

8. A computer network according to any of the Claims 1 to 7,
characterised in that
a node is provided exclusively for the entitlement device.

9. A computer network according to any of the Claims 1 to 8,
characterised in that
the entitlement device contains the updated access entitlements at a given time.

10. A computer network according to any of the Claims 1 to 9,
characterised in that
the access entitlements are defined by the function programs carried out on the individual nodes in each case, and that the call-up commands are generated automatically in the access programs (STUB) by means of compilers from the function devices.

11. A process for controlling accesses in a computer network with at least three nodes (21, 22, 23), in which function devices are provided for the performance of functions,
where said process contains the following steps:
- the function devices send a call-up command (inquiry), before accessing to a node, to an entitlement device (25) responsible for all the nodes, in order to check the entitlement of this access;
- the function devices send a call-up command (passing), for passing the access entitlement to another node, to the entitlement device (25), in order to generate an access entry at that node;
- the function devices send a call-up command (returned) to the entitlement device in order to terminate the passing of the entitlement, in order to delete the entitlement entry at that node.

12. A process according to Claim 11,
characterised in that
the call-up commands to the entitlement device are generated by access programs (STRUT), which are generated automatically by compiler programs for the function devices.

## Revendications

1. Réseau d'ordinateurs comportant au moins trois noeuds (21, 22, 23) dans lesquels sont prévus des moyens fonctionnels destinés à exécuter des fonctions, un moyen fonctionnel du premier noeud (21) pouvant accéder au moins à un moyen fonctionnel du deuxième noeud, et avec un dispositif d'autorisation (25) destiné à mémoriser les autorisations d'accès actuels aux noeuds,
caractérisé en ce que,
exclusivement le dispositif d'autorisation (25) contient toutes les informations concernant les autorisations d'accès actuels aux noeuds, et en ce que, à chaque accès à un noeud, le dispositif d'autorisation est interrogé ou actualisé par un programme d'accès (STUB).

2. Réseau d'ordinateurs selon la revendication 1, caractérisé en ce que, dans les programmes d'accès, est prévue une consultation (passage) qui, dans le dispositif d'autorisation, mémorise le renvoi de l'autorisation d'accès d'un noeud à un autre noeud.

3. Réseau d'ordinateurs selon la revendication 2, caractérisé en ce que le renvoi de l'autorisation d'accès peut être limité.

4. Réseau d'ordinateurs selon la revendication 2 ou 3, caractérisé en ce que l'autorisation d'accès peut être renvoyée simultanément à plusieurs noeuds.

5. Réseau d'ordinateurs selon l'une des revendications 2 à 4, caractérisé en ce que l'autorisation d'accès peut être retransmise en plusieurs niveaux.

6. Réseau d'ordinateurs selon l'une des revendications 2 à 5, caractérisé en ce que, dans les programmes d'accès, sont prévus une consultation (retourné) qui efface le renvoi de l'autorisation d'accès dans le dispositif d'autorisation.

7. Réseau d'ordinateurs selon l'une des revendications 1 à 6, caractérisé en ce que dans les programmes d'accès (STUB) est prévue une consultation (interrogation) qui effectue le contrôle de l'autorisation d'accès dans le dispositif d'autorisation.

8. Réseau d'ordinateurs selon l'une des revendications 1 à 7, caractérisé en ce qu'un noeud est prévu exclusivement pour le dispositif d'autorisation.

9. Réseau d'ordinateurs selon l'une des revendications 1 à 8, caractérisé en ce que le dispositif d'autorisation contient à un moment donné seulement les autorisations d'accès actuelles.

10. Réseau d'ordinateurs selon l'une des revendications 1 à 9, caractérisé en ce que les autorisations d'accès sont définies par les programmes fonctionnels exécutés sur le noeud spécifique et en ce que les consultations dans les programmes d'accès (STUB) sont générées automatiquement par un compilateur des moyens fonctionnels.

11. Procédé de commande des accès dans un réseau d'ordinateurs avec au moins trois noeuds (21, 22, 23), dans lesquels sont prévus des moyens fonctionnels pour exécuter des fonctions,
le procédé contenant les étapes ci-après :
- les moyens fonctionnels envoient avant l'accès à un noeud une consultation (interrogation) à un dispositif d'autorisation (25) compétent pour tous les noeuds, afin de vérifier l'autorisation à ce noeud;
- les moyens fonctionnels envoient, pour la retransmission de l'autorisation d'accès à un autre noeud, une consultation (passage) au dispositif d'autorisation (25), afin d'y générer une mention d'autorisation;
- les moyens fonctionnels envoient, pour achever la retransmission de l'autorisation, une consultation (retourné) au dispositif d'autorisation, afin d'y effacer la mention d'autorisation.

12. Procédé selon la revendication 11, caractérisé en ce que les consultations faites au dispositif d'autorisation sont générées par des programmes d'accès (STRUT) qui sont générés automatiquement par des programmes compilateurs destinés aux moyens fonctionnels.
